(19) **Europäisches Patentamt**

**European Patent Office**

**Office européen des brevets**

(11) **EP 0 459 396 B1**

(12) **EUROPEAN PATENT SPECIFICATION**

(45) Date of publication and mention
of the grant of the patent:
**16.04.1997 Bulletin 1997/16**

(51) Int. Cl.$^6$: **B01D 53/58**

(21) Application number: **91108690.8**

(22) Date of filing: **28.05.1991**

(54) **Process for removing nitrogen oxides from exhaust gases**

Verfahren zum Entfernen von Stickoxiden aus Abgasen

Procédé pour l'élimination d'oxydes d'azote des gaz d'échappement

(84) Designated Contracting States:
**DE FR GB IT**

(30) Priority: **28.05.1990 JP 139340/90**
        **01.08.1990 JP 204102/90**
        **01.08.1990 JP 204103/90**
        **01.08.1990 JP 204104/90**

(43) Date of publication of application:
**04.12.1991 Bulletin 1991/49**

(73) Proprietors:
• **AGENCY OF INDUSTRIAL SCIENCE AND TECHNOLOGY**
  **Chiyoda-ku Tokyo (JP)**
• **COSMO RESEARCH INSTITUTE**
  **Tokyo (JP)**

(72) Inventors:
• **Kintaichi, Yoshiaki,**
  **c/o National Chemical**
  **Tsukuba-shi, Ibaraki (JP)**

• **Hamada, Hideaki,**
  **c/o National Chemical**
  **Tsukuba-shi, Ibaraki (JP)**
• **Ito, Takehiko,**
  **c/o National Chemical**
  **Tsukuba-shi, Ibaraki (JP)**
• **Sasaki, Motoi,**
  **c/o National Chemical**
  **Tsukuba-shi, Ibaraki (JP)**
• **Tabata, Mitsunori**
  **Satte-shi, Saitama (JP)**
• **Usui, Kazushi**
  **Noda-shi, Chiba (JP)**

(74) Representative: **Hansen, Bernd, Dr. Dipl.-Chem. et al**
  **Hoffmann, Eitle & Partner**
  **Patent- und Rechtsanwälte,**
  **Postfach 81 04 20**
  **81904 München (DE)**

(56) References cited:
  **EP-A- 0 135 033**     **EP-A- 0 286 967**
  **DE-A- 2 239 489**     **DE-A- 3 544 998**

## Description

Nitrogen oxides (referred to hereinafter as "NOx") which are contained in various types of exhaust gas not only threaten the health of individuals but are in general environmentally undesirable, since they may cause acid rain or photochemical smog. Accordingly, the development of an effective means for exhaust gas treatment, specifically the development of an effective NOx abatement method, has been sought by those in the art.

Some processes for reducing the NOx content of exhaust gases using catalysts have been put into practice. As examples of such processes, there can be mentioned a ternary catalyst process for gas fueled automobiles and a selective catalytic reduction process using ammonia for exhaust gases which are discharged from heavy industrial installations comprising, for example, boilers.

JP-A-63-283727 (the term "JP-A" as used herein signifies an "unexamined published Japanese patent application) describes a process for removing NOx from exhaust gases containing hydrocarbons which comprises bringing the exhaust gases containing NOx into contact with a zeolite having dispersed therein various types of metals. Various metals have been added to such a zeolite, and the resulting product is utilized as the catalyst.

In the first process proposed above, i.e., in the ternary catalyst process, the hydrocarbon components and carbon monoxide initially present in the waste gas which is exhausted upon combustion of the fuel are converted to water and carbon dioxide with the aid of a catalyst while consuming the oxygen in the NOx to thereby reduce it to nitrogen. In this process, however, the combustion must be carefully controlled in that a stoichiometric amount of oxygen is supplied to the combustion system so that the oxygen content in the NOx compensates for the amount of oxygen consumed in the oxidation of the hydrocarbon components and the carbon monoxide. Thus, this process is, by principle, not applicable to combustion systems where excess oxygen is present, such as systems involving a diesel engine.

The second process, i.e., the selective catalytic reduction process using ammonia, requires a very large scale installation for the sake of safety, since the process handles toxic and inflammable ammonia under high pressure. Accordingly, the process is not applicable, from the technological viewpoint, to systems comprising movable exhaust gas sources.

The last process mentioned above, i.e., the process for removing NOx from a hydrocarbon-containing exhaust gas using a zeolite catalyst, is intended for application mainly to gas-fueled automobiles. Accordingly, the process is unsuitable for treating exhaust produced by combustion in a diesel engine. If the process were to be applied diesel engines, the activity of the catalyst would be insufficient to achieve the desired level of NOx removal. In more detail, since metal components are present in the catalyst, the catalyst not only suffers degradation due to the sulfur oxides discharged from the diesel engine, but also loses activity due to aggregation or a like behavior of the metal components thereof. Thus, this process has not been put into practice for the removal of NOx from exhaust gases discharged from diesel engines.

DE-A-35 44 998 discloses a process for reducing the content of $NO_x$ from exhaust gases by feeding alkanes to the exhaust gases in a specific molar ratio with respect to the $NO_x$-content. It is proposed to use a catalyst containing metal oxides selected from the groups IV, V, VI and/or VIII of the Periodic Table.

DE-A-22 39 489 discloses a catalyst which may be used for the treatment of exhaust gases of combustion engines. This catalyst comprises a carrier with platinum provided thereupon. The catalyst is a noble metal. The function of the carrier, which may be an acidic carrier, is to prevent the formation of ammonia as an undesired by-product.

In light of the above, the present inventors conducted intensive research to overcome the problems set forth above, and, as a result, found that the use of a particular catalyst removes the NOx components from exhaust gases at high efficiency without a loss of activity even in the presence of sulfur oxides. It was further found that this removal process can be conducted without producing harmful substances such as carbon monoxide. This is an aspect of the present invention which makes the process disclosed herein highly advantageous, since conventional processes frequently discharge such substances into the atmosphere, depending on the reaction conditions involved.

Thus, an object of the present invention is to efficiently remove NOx in an oxidizing atmosphere from exhaust gases discharged from various plants and equipment, including diesel engines and the like.

The present invention provides a process which comprises bringing an exhaust gas containing nitrogen oxides into contact with at least one catalyst selected from the group consisting of a proton-type zeolite, a zeolite in alkali metal exchanged form and an acidic alumina in an oxidizing atmosphere containing excess oxygen and in the presence of a hydrocarbon or an oxygen-containing compound, wherein the excess oxygen ratio is from about 20 to about 200 %.

Preferred embodiments of the process are described in the sub-claims.

Conventionally, the use of the catalysts as described herein has not been considered because it was believed to be unlikely that catalytic reduction of NOx would occur at high efficiency using a catalyst system which contained no transition metal species. That is, in an oxidation-reduction reaction, metal oxides having acid sites (e.g., silica-alumina) or zeolites containing no transition metal species were generally believed to lack sufficient activity.

Surprisingly, even though catalysts containing no transition metal species were used, not only was NOx removed at high efficiency but a drop in catalyst activity ascribed to reaction with sulfur oxides was avoided. The effect provided by adding a metal such as copper was further in conflict with prior beliefs, since, contrary to the inventors' assumption, the addition of such a metal impaired the catalyst activity.

The zeolites for use in the present invention specifically include, pentasil-type zeolites, mordenites, zeolites Y, zeolites X, zeolites L and silicalites.

There is no particular restriction on the Si/Al ratio ($SiO_2/Al_2O_3$ ratio by formula weight, molar ratio) of the zeolites used in the present invention, but it is preferred to use those having an Si/Al ratio in the range of from about 5 to about 200, more preferably, from about 10 to about 100, from the viewpoint of having higher stability against heat and moisture.

The zeolites mentioned above may be produced by conventional processes, for example, by hydrothermal synthesis using a mixture of a silica source (e.g., silica, silica sol or sodium silicate), an alumina source (e.g., alumina gel, alumina sol or sodium aluminate), an alkali metal source (e.g., sodium hydroxide or sodium silicate), and water as starting materials. The starting mixture may further contain, if necessary, an organic base such as an amine. The product obtained by the hydrothermal synthesis is then separated, washed with water, and dried to obtain a zeolite containing an alkali metal.

To obtain a sodium exchanged zeolite form, an ion exchange treatment should be further carried out on the synthesized zeolite.

A proton-type zeolite can then be obtained from an alkali metal exchanged form zeolite by first preparing an ammonium ion exchanged zeolite by reacting an aqueous solution of ammonium chloride or ammonium nitrate with a zeolite containing an alkali metal, and then calcining the resulting ammonium ion exchanged form zeolite in the temperature range of from about 400 to about 700°C.

The use of such a proton-type zeolite permits efficient decomposition removal of NOx components.

The acidic alumina can be used in admixture with the zeolites, but also may be used alone. The acidic alumina when used alone is practically advantageous since it may be readily obtained by a simple synthetic process, that is, by calcining metal hydroxides in the temperature range of from about 400 to about 700°C.

The metal oxides may be further treated with a compound containing a sulfate group ($SO_4^{2-}$), which exhibits further improved efficiency in the catalytic reduction of NOx into elemental nitrogen as compared with non-treated metal oxides. As specific examples of compounds containing the sulfate group, there can be mentioned sulfuric acid and ammonium sulfate, and further included are compounds which produce sulfate groups on metal oxides when the treated products are dried and calcined after the treatment.

The metal oxide catalysts which are treated with a compound containing sulfate groups, i.e., sulfuric acid for example, are produced by first bringing metal oxides (e.g., alumina, titanium oxide, zirconium oxide, silica-alumina, silica-magnesia, silica-zirconia or alumina-titania) into contact at room temperature with sulfuric acid having a predetermined concentration, and then calcining the dried product obtained therefrom in air at a predetermined temperature. A catalyst having higher activity can be obtained, however, by subjecting an amorphous oxide or a corresponding hydroxide to the same treatment.

The concentration of the sulfuric acid used in the treatment differs according to the oxide with which the acid is to be impregnated, but, in general, it is in the range of from about 0.01 to about 10 mole/$\ell$, and, more preferably, in the range of from about 0.1 to about 5 mole/$\ell$. The sulfuric acid is brought into contact with alumina in a weight amount of from about 5 to about 20 times the weight amount of the alumina (catalyst).

If the concentration of the sulfuric acid is less than about 0.01 mole/$\ell$, the effect of the sulfuric acid on the activation of NOx reduction is not fully exhibited; if the concentration exceeds about 10 mole/$\ell$, unfavorable results such as the destruction of the catalyst structure and the formation of metal sulfates are apt to occur, which are not preferred.

Ammonium sulfate may be used in place of sulfuric acid as the compound having a sulfate group, in a similar manner as above.

Calcination in air is conducted, in general, though dependent on the type of the oxide, in the temperature range of about 300 to about 850°C, and preferably from about 400 to about 700°C, and in the time range of about 2 to about 5 hours.

If the calcination in air is carried out at a temperature of lower than 300°C, the compounds such as sulfuric acid utilized in the treatment are not fully removed such that active catalytic sites are not sufficiently produced; if the temperature for the calcination in air exceeds 850°C, there may occur unfavorable results such as a reduction in surface area of the catalyst or the destruction of active catalyst sites.

In another embodiment according to the process of the present invention, the exhaust gas may be further brought into contact with an oxidizing catalyst downstream of the first catalyst above discussed. The oxidizing catalysts for use include those comprising a porous support or carrier made of, for example, active alumina, silica or zirconia, which carry catalyst components such as noble metals (e.g., platinum, palladium, rhodium, ruthenium or iridium), base metals (e.g., lanthanum, cerium, copper or iron), and perovskite oxides (e.g., cobalt lanthanum trioxide, iron lanthanum trioxide or cobalt strontium trioxide). The catalyst components mentioned above are either used singly or as a combination of two or more thereof.

The catalyst component in this case is carried in an amount of from about 0.01 to about 2% by porous support or carrier weight if it is a noble metal, while it is carried in an amount of from about 5 to 70% by porous support or carrier weight if it is a base metal.

In using a noble metal catalyst or a base metal catalyst, if the amount of the catalyst component carried in the carrier is less than the lower limits mentioned above, the sufficient effect of using them as an oxidizing catalyst cannot be expected. If the catalysts are used in an amount exceeding the upper limits, on the other hand, the degree of improvement as compared with the amount of addition is not as high as expected.

The proportion of the reducing catalyst to the oxidizing catalyst, as well as the amount of the catalyst component carried on the oxidizing catalyst can be properly selected according to the performance required of the catalyst system. Particularly, when the substance to be removed by oxidation is an intermediate such as carbon monoxide produced during the oxidation of a hydrocarbon, there may be used a mixture of a reducing catalyst and an oxidizing catalyst. In general, however, the catalysts are used in such an arrangement in which the reducing catalyst is first contacted with the exhaust gas and then the oxidizing catalyst is contacted with the exhaust gas.

In the practical use of such catalysts, for example, a reactor charged with a reducing catalyst is set at the exhaust gas inlet side (primary stage) with another reactor charged with an oxidizing catalyst set at the exhaust gas discharge side (secondary stage). It is also possible to use a single reactor charged with a reducing catalyst and an oxidizing catalyst at a proportion determined according to the required performance.

The (A) reducing catalysts and the (B) oxidizing catalysts are used, in terms of (A)/(B) weight ratio, in the range of from approximately 0.5/9.5 to about 9.5/0.5.

There is no particular restriction on the shape or the structure of the above catalysts, and they may be used as a powder, granules, pellets, honey-combs and the like.

Additives such as binders which are intended for imparting moldability to the catalysts, for example, non-acidic oxides including silica, silica sol, carbon wax, as well as fats and oils, may also be incorporated in admixture with the active catalyst components.

The process according to the present invention is intended for NOx abatement of exhaust gases discharged from diesel engines of diesel engine automobiles, stationary diesel engines and the like, as well as for the treatment of exhaust gases discharged from gasoline fueled engines such as gasoline fueled automobiles. It is also intended to be used for treating exhaust gases discharged from plants manufacturing nitric acid, various types of combustion installations, and the like.

The NOx components are removed from the exhaust gases above by bringing the catalysts set forth above into contact with the exhaust gas in an oxidizing atmosphere, in the presence of a hydrocarbon or an oxygen-containing compound.

The oxidizing atmosphere referred to herein signifies an atmosphere containing an excess amount of oxygen with respect to the amount required to effect complete oxidation of the components of the exhaust gas (i.e., carbon monoxide, hydrogen, hydrocarbons, and oxygen-containing compounds) and of the optionally used reducing substance for the hydrocarbons or oxygen-containing compounds, to yield water and carbon dioxide. There can be mentioned, in the case of a combustion engine such as in an automobile, for example, an atmosphere having an excess air ratio (lean region), which commonly has an excess oxygen ratio of from about 20 to about 200%.

In an oxidizing atmosphere as defined above, the NOx is predominantly reduced, since the catalyst (which is first contacted with or upstream of the exhaust gas flow) selectively promotes the reaction of the hydrocarbons or oxygen-containing compounds with NOx over that of the hydrocarbons or oxygen-containing compounds with oxygen.

The hydrocarbons or oxygen-containing compounds which are present may be residual hydrocarbon or oxygen-containing compound which have remained in the exhaust gas, but if the residual hydrocarbon or oxygen-containing compound present is too low with respect to the amount required to promote the reaction between the hydrocarbon or oxygen-containing compound and the NOx, a compensatory amount of hydrocarbon or oxygen-containing compound should be additionally supplied.

There is no particular restriction with respect to the amount of the hydrocarbon or oxygen-containing compound present, but it is preferred that there be excess hydrocarbon or oxygen-containing compound in the reaction system, since the reduction reaction more favorably proceeds in the presence of excess hydrocarbon or oxygen-containing compound with respect to the amount strictly or stoichiometrically necessary for the reduction of NOx. In general, the hydrocarbon or oxygen-containing compound is used in an amount about 20 to about 2,000% excess, more preferably, from about 30% to about 1,500% excess, with respect to the theoretical or stoichiometrical amount of the hydrocarbon or oxygen-containing compound necessary for the reduction decomposition of the NOx.

The theoretical amount of hydrocarbon or oxygen-containing compound necessary for the reduction decomposition of the NOx is defined herein as the amount of hydrocarbon or oxygen-containing compound necessary for reducing nitrogen dioxide ($NO_2$) into nitrogen. Since there is oxygen present in the reaction system, it is assumed that the oxygen finally oxidizes all NOx present into nitrogen dioxide. To this end, for example, in the case of reducing 1000 ppm of nitric oxide (NO) in the presence of oxygen using propane as the hydrocarbon, the theoretical amount of propane necessary in the system is 200 ppm.

In general, the hydrocarbon necessary in the system is in the range of from about 50 ppm to about 10,000 ppm, in terms of methane, though it depends on the amount of the NOx present in the exhaust gas.

There is no particular restriction with respect to the hydrocarbon or oxygen-containing compound used in the process according to the present invention, and there may be used any type of hydrocarbon or oxygen-containing compound including gaseous hydrocarbons or oxygen-containing compounds and liquid hydrocarbons or oxygen-containing compounds, so far as the hydrocarbon or oxygen-containing compound is gaseous at the reaction temperature.

As specific gaseous hydrocarbons, examples are methane, ethane, propane, butane, ethylene, propylene, and butylene; as liquid hydrocarbons, included are petroleum based hydrocarbons such as gasoline, kerosene, gas oil and heavy oil, as well as oxygen-containing compounds such as alcohols (e.g., methanol or ethanol), ethers (e.g., dimethyl ether, ethyl ether or propyl ether), esters (e.g., methyl acetate or ethyl acetate), and ketones (e.g., acetone or methyl ethyl ketone).

The reaction is carried out by passing the NOx-containing exhaust gas through a reaction vessel containing the zeolites or the metal oxides earlier discussed, in an oxidizing atmosphere and in the presence of at least one hydrocarbon or oxygen-containing compound.

There may be cases, depending on the reaction conditions, in which toxic components such as carbon monoxide are discharged from the reaction vessel. In such a case, the exhaust gas passed through the reaction vessel (the first reaction vessel) is continuously introduced into a second reaction vessel charged with an oxidizing catalyst, which is provided downstream from the first reaction vessel. With such an arrangement, it is possible to remove the NOx component and then remove hydrocarbons or oxygen-containing compounds as well as toxic components, such as carbon monoxide, by oxidation.

The optimum temperature for the reaction differs depending on the type of the catalyst and the hydrocarbon or oxygen-containing compound. It is preferred, however, that the temperature is as close as possible to that of the exhaust gas temperature, since in such a case there is no need to install any heating means or the like to adjust the temperature. Thus, it is preferred that the reaction temperature be in the range of from about 200 to about 800°C, and particularly preferred is a temperature from about 300 to about 600°C.

The reaction is carried out under normal exhaust pressure, since there is no particular restriction with respect to the pressure conditions. The hourly space velocity, SV, at which the exhaust gas is introduced into the catalyst layer varies depending on reaction conditions such as the reaction temperature as well as the required rate of removal of the NOx and the toxic components. Though the SV is not particularly limited, it is generally in the range of from about 500 to about 100,000 $hr^{-1}$, and preferably, in the range of from about 1,000 to about 70,000 $hr^{-1}$.

In the case of applying the process according to the present invention to the treatment of exhaust gas discharged from an internal combustion engine, the catalysts according to the present invention preferably is downstream of the exhaust manifold of the engine.

It can be seen from the foregoing that the process according to the present invention not only efficiently removes the NOx components from the exhaust gas in an oxidizing atmosphere in the presence of excess oxygen, but that it effectively prevents the discharge of toxic components such as carbon monoxide. Such an effect has been realized by the use of a proton-type zeolite or a zeolite containing an alkali metal, or by the use of an acidic metal oxide in the presence of a hydrocarbon or oxygen-containing compound, thereby preferentially accelerating the reaction of NOx with the hydrocarbon or oxygen-containing compound. Further, the use of an oxidizing catalyst enables complete oxidation of any non-reacted hydrocarbon or oxygen-containing compounds present as well as intermediate oxidized products which can include carbon monoxide, and converts them into carbon dioxide and water vapor. Such non-reacted hydrocarbons or oxygen-containing compounds and intermediate oxidized products have been a problem in some cases, since they were likely to be discharged to the atmosphere, depending on the reacting conditions.

The process according to the present invention is, therefore, of high practical value in industry, since it not only removes NOx components effectively from exhaust gases discharged from various sources including diesel engines and the like, but also effectively avoids discharge of toxic components to the atmosphere.

The invention is explained in further detail below making reference to Examples and Comparative Examples.

In the following, all parts and percents are by weight except gaseousness.

## EXAMPLE 1

### Preparation of pentasil-type zeolite

In an aqueous solution obtained by dissolving 957 g of sodium silicate into 1,200 g of water there was gradually added (with stirring over 30 minutes) an aqueous solution prepared by dissolving 41 g of aluminum sulfate, 80 g of conc. sulfuric acid and 360 g of sodium chloride into 1,600 g of water. To the resulting solution was then further added 120 g of ammonium tetrapropyl bromide to adjust the pH to 10.

The mixed solution was charged into an autoclave while maintaining the temperature of the contents at 165°C while stirring over 16 hours, to obtain a crystallized product. The crystals thus obtained were separated, washed with water, and dried to obtain a pentasil-type ZSM-5 zeolite having an $SiO_2/Al_2O_3$ ratio of 62.7. This zeolite was used as the starting material in the subsequent examples.

Preparation of a proton-type pentasil-type zeolite

Into 500 ml of a solution containing 1 mole/$\ell$ of ammonium nitrate solution was charged 20 g of the pentasil-type zeolite prepared above, and after stirring and refluxing for one whole day, the solution was subjected to centrifugal separation.

After washing the zeolite thus separated five times with pure water and drying overnight at 110°C, it was calcined in air at 500°C for 3 hours to obtain a proton-type ZSM-5 zeolite.

Removal of NOx

One gram of the proton-type zeolite catalyst thus prepared above was charged into a normal pressure flow type reaction apparatus, to which was introduced a mixed gas at a flow rate of 60 ml/minute to effect reaction. The gas mixture comprised helium gas carrying 1,000 ppm nitric oxide (hereinafter referred to as "NO"), 10% oxygen, and 300 ppm propylene (a space velocity of about 2,000 $hr^{-1}$). The helium gas was used to ensure analyzing $N_2$ produced on reaction.

The gas obtained after the reaction was analyzed by means of an NOx analyzer and a gas chromatograph.

The catalytic reduction ratio of the NO into nitrogen (percentage conversion of NO to $N_2$) was obtained from the yield of the nitrogen produced on reaction, and the results are given in Table 1 as Example 1. The formula used to calculate the catalytic reduction ratio is as below:

$$\frac{N_2 \text{ formed (in mole)} \times 2}{NO_x \text{ introduced into reactor (in mole)}} \times 100$$

Example 2

The catalytic reduction ratio of NO was determined in the same manner as in Example 1, except for using propane as the hydrocarbon. The results are given in Table 1 as Example 2.

Example 3

Preparation of proton-type mordenite

Into 500 ml of a solution containing 1 mole/$\ell$ of ammonium nitrate solution was charged 20 g of a commercially available sodium-form mordenite having an $SiO_2/Al_2O_3$ ratio of 20.1. After stirring and refluxing for one whole day, the solution was subjected to centrifugal separation.

After washing the zeolite thus separated five times with pure water and then drying overnight at 110°C, it was calcined in air at 500°C for 3 hours to obtain a proton-type mordenite.

Removal of NOx

The catalytic reduction ratio of NO was determined in the same manner as in Example 1 using the thus prepared proton-type mordenite, except for using propane as the hydrocarbon. The results are given in Table 1 as Example 3.

Example 4

The catalytic reduction ratio of NO was determined in the same manner as in Example 1 except for using as the zeolite a commercially available proton-type stabilized Y-zeolite having an $SiO_2/Al_2O_3$ ratio of 49.7. The results are given in Table 1 as Example 4.

Example 5

The catalytic reduction ratio of NO was determined in the same manner as in Example 1 except for using as the zeolite a silicalite, i.e., a pentasil-type zeolite containing no aluminum, and using propane as the hydrocarbon. The results are given in Table 1 as Example 5.

Example 6

Preparation of Na-zeolite

Into 500 ml of a solution containing 1 mole/ℓ of sodium nitrate solution was charged the base zeolite ZSM-5 prepared in the same manner as in Example 1. After stirring and refluxing with heating for one whole day the solution was subjected to centrifugal separation.

After washing the zeolite thus separated five times with pure water, it was dried overnight at 110°C to obtain a Na exchanged form ZSM-5 zeolite.

Removal of NOx

The catalytic reduction ratio of NO was determined in the same manner as in Example 1 except for using the thus prepared Na-form ZSM-5 zeolite. The results are given in Table 1 as Example 6.

Comparative Example 1

Preparation of copper-carrying zeolite

A 0.05 mole/ℓ solution of commercially available copper acetate was prepared. The base zeolite ZSM-5 prepared in the same manner as in Example 1 was then charged thereinto. After stirring and refluxing with heating the resulting mixture for one whole day, the solution was subjected to centrifugal separation.

The process was repeated thrice, and after finally washing the resulting zeolite five times with pure water, it was dried overnight at 110°C to obtain a copper-bearing zeolite.

Removal of NOx

The catalytic reduction ratio of NO was determined in the same manner as in Example 1 except for using the thus prepared copper-bearing zeolite and using propane as the hydrocarbon. The results are given in Table 1 as Comparative Example 1.

As is clear from Table 1, the effectiveness of the zeolites containing no metal is clearly shown since the catalytic reduction ratio of NO of the copper-bearing zeolite is inferior to the other Examples.

Example 7

The catalytic reduction ratio of NO was determined in the same manner as in Example 1 except for using a proton-type ZSM-5 (H-ZSM-5) treated at 500°C for 6 hours in a mixed gas comprising 900 ppm of sulfur dioxide and 5% oxygen, and using propane as the hydrocarbon. The results are given in Table 1 as Example 7.

It can be seen from the Table that the present catalyst is completely free from being poisoned by the SOx, since the catalytic reduction ratio remained the similar to that of the catalyst prepared in Example 2.

Table 1

| (Catalytic reduction of NO into $N_2$ using a zeolite catalyst) | | | | |
|---|---|---|---|---|
| | Catalyst | Hydrocarbon | Reaction temperature (°C) | Catalytic redn. ratio of NO to $N_2$ (%) |
| Ex.1 | H-ZSM-5 | propylene | 600 | 8.5 |
| | | | 500 | 14 |
| | | | 400 | 27 |
| | | | 300 | 51 |
| | | | 250 | 51 |
| Ex.2 | H-ZSM-5 | propane | 600 | 24 |
| | | | 500 | 38, 63* |
| | | | 400 | 59, 84* |
| | | | 300 | 49 |
| Ex.3 | H-mordenite | propane | 600 | 32 |
| | | | 500 | 48 |
| | | | 400 | 65 |
| | | | 300 | 58 |
| Ex.4 | H-Y | propylene | 300 | 36 |
| Ex.5 | Silicalite | propane | 400 | 22 |
| Ex.6 | Na-ZSM-5 | propylene | 400 | 14 |
| | | | 300 | 32 |
| | | | 200 | 20 |
| Comp. Ex.1 | Cu-ZSM-5 | propane | 500 | 9.1 |
| | | | 400 | 8.5 |
| | | | 300 | 8.3 |
| Ex.7 | H-ZSM-5 (SOx) | propane | 500 | 40 |
| | | | 400 | 55 |

*: The amount of hydrocarbon addition was 900 ppm.

<u>Examples 8 and 9</u>

The catalytic reduction ratio of NO was determined in the same manner as in Example 1 except for using alumina powder having a specific surface area of 400 $m^2$/g and pelletized γ-alumina as the catalysts, and using propane as the hydrocarbon. The results are given in Table 2 as Examples 8 and 9.

<u>Comparative Example 2</u>

The catalytic reduction ratio of NO was determined in the same manner as in Example 1 except for using commercially available silica gel as the catalyst. The results are given in Table 2 as Comparative Example 2.

It is apparent from Table 2 that a silica gel, which has no surface acidity, has no activity for catalytic reduction despite its high surface area.

Comparative Example 3

The catalytic reduction ratio of NO was determined in the same manner as in Example 1 except for using commercially available α-alumina as the catalyst. The results are given in Table 2 as Compartive Example 3.

It is apparent from Table 2 that an α-alumina, which has no surface acidity and an extremely small specific surface area, has no activity for catalytic reduction.

Table 2

| (Catalytic reduction of NO into nitrogen using a metal oxide) | | | | |
|---|---|---|---|---|
| | Catalyst | Form | Reaction temperature (°C) | Catalytic reduction ratio of NO into $N_2$ (%) |
| Ex. 8 | Alumina (400 m2/g) | powder | 600 | 49 |
| | | | 500 | 68 |
| | | | 400 | 30 |
| Ex. 9 | γ-Alumina | pellets | 600 | 18 |
| | | | 500 | 37 |
| | | | 400 | 14 |
| | | | 300 | 1.8 |
| Comp. Ex. 2 | Silica gel | powder | 600 | ≤1.0 |
| | | | 500 | ≤1.0 |
| | | | 400 | ≤0.6 |
| | | | 300 | ≤0.4 |
| Comp. Ex. 3 | α-Alumina | pellets | 700 | ≤1.4 |
| | | | 600 | ≤0.8 |
| | | | 500 | ≤0.7 |
| | | | 400 | ≤0.8 |

Example 10

The catalytic reduction ratio of NO was determined in the same manner as in Example 1 except for using alumina powder having a specific surface area of 285 $m^2$/g as the catalyst and using propane as the hydrocarbon. The amount of the hydrocarbon added was varied. The results obtained by varying the addition amount of the hydrocarbon are given in Table 3 as Example 10.

The results show that the catalytic reduction ratio of NO increases with increasing the amount of hydrocarbon.

Table 3

| (Catalytic reduction of NO using a metal oxide) | | | | | | |
|---|---|---|---|---|---|---|
| | Catalyst | Reaction Temp. (°C) | Reduction ratio of NO into $N_2$ (%) | | | |
| | | | Propane added (ppm) | | | |
| | | | 300 | 600 | 1000 | 1300 |
| Ex. 10 | Alumina powder (285cm$^2$/g) | 500 | 36 | 67 | 89 | 97 |
| | | 600 | 18 | 37 | 54 | - |

Example 11

The catalytic reduction ratio of NO was determined in the same manner as in Example 1 except for using 0.1 g of the same alumina powder as was used in Example 8. The alumina as a catalyst had a specific surface area of 400 m$^2$/g. Propane was used as the hydrocarbon. The amount of the propane was varied. The results obtained by varying the propane amount are given in Table 4 as Example 11.

The results show that a high catalytic reduction ratio of NOx is obtained even in a reaction performed at a high space velocity of about 20,000 hr$^{-1}$.

Table 4

| (Catalytic reduction of NO using a metal oxide) | | | | | | | |
|---|---|---|---|---|---|---|---|
| | Catalyst | Reaction Temp. (°C) | Reduction ratio of NO into $N_2$ (%) | | | | |
| | | | Propane added (ppm) | | | | |
| | | | 300 | 600 | 1000 | 1900 | 2600 |
| Ex. 11 | Alumina powder (400cm$^2$/g) | 600 | 24 | 46 | 75 | 90 | 94 |

Example 12 and 13

The catalytic reduction ratio of NO was determined in the same manner as in Example 1 except for using 1 g each of the same H-ZSM-5 as was used in Example 1 and the same alumina powder having a specific surface area of 285 m$^2$/g as was used in Example 10 as catalysts, and using propane as the hydrocarbon while changing the concentration of the accompanying oxygen. The results are given in Table 5 as Examples 12 and 13.

The results show that a high catalytic reduction ratio of NO is obtained over a wide concentration range of the accompanying oxygen.

Table 5

| (Catalytic reduction of NO under various oxygen concentrations) | | | | | | |
|---|---|---|---|---|---|---|
| | Catalyst | Reaction Temperature (°C) | Reduction ratio of NO into $N_2$ (%) | | | |
| | | | Oxygen concentration (%) | | | |
| | | | 0.2 | 1 | 5 | 10 |
| Ex. 12 | H-ZSM-5 powder | 400 | | 53 | 55 | 52 |
| | | 500 | | 44 | 37 | 35 |
| Ex. 13 | Alumina powder (285cm$^2$/g) | 500 | 6 | 15 | | 32 |
| | | 600 | 21 | 33 | | 17 |

Example 14

Four grams of commercially available FCC alumina was taken on a filter paper, and was then air dried after applying thereto 60 ml of 0.25 mole/$\ell$ sulfuric acid. The thus obtained dried alumina was calcined in an air flow at 600°C for 3 hours to obtain a sulfuric acid treated alumina catalyst.

The catalytic reduction ratio of NO was determined in the same manner as in Example 1 except for using the thus obtained sulfuric acid treated alumina catalyst as the catalyst and using propane as the hydrocarbon. The results are given in Table 6 as Example 14.

In this case, 1 g of the above catalyst was charged in a normal pressure flow type fixed bed reaction apparatus into which was introduced a mixed gas at a rate of 60 ml per minute to carry out the reaction at various temperatures as are given in Table 6 and to determine the catalytic reduction of NO in the same manner as in Example 1. The gas mixture comprised helium gas carrying thereon 1,000 ppm NO, 10% oxygen, and 300 ppm propane. The reaction gas was analyzed in the same manner as in Example 1.

Table 6

| (Catalytic reduction of NO using a sulfuric acid treated metal oxide catalysts) | | | |
|---|---|---|---|
| | Catalyst | Reaction temperature (°C) | Catalytic reduction ratio of NO into $N_2$ (%) |
| Ex. 14 | sulfuric acid treated alumina | 300 | 6.3 |

Example 15

Removal of NOx

One gram of the same proton-type ZSM-5 zeolite catalyst as was prepared in Example 1 above was charged together with 1 g of 0.5% Pt on alumina into a normal pressure flow fixed bed type reaction apparatus, arranged in such a manner that the H-ZSM-5 was first (up stream) and the Pt on alumina was second (down stream). There was then introduced into the reaction apparatus a mixed gas at a flow rate of 60 ml/minute and reaction carried out at various temperatures as shown in Table 7. The gas mixture comprised helium gas, carrying therein 1,000 ppm NO, 10% oxygen and 300 ppm propane.

The gas thus treated was analyzed by means of a gas chromatograph to determine the nitrogen yield, from which the catalytic reduction ratio of NO was obtained.

The ratio of catalytic reduction of NO into nitrogen, the amount of exhaust CO and the amount of propane and $CO_2$ involved in the reaction are given in Table 7 as Example 21.

It can be clearly seen from Table 7 that propane is almost completely oxidized to carbon dioxide with the catalytic reduction of the NOx.

Reference Example 1

Catalytic reduction of NO was carried out in the same manner as in Example 15, except for using 1 g of H-ZSM-5 alone without using any Pt on alumina. The results are given in Table 7 as Reference Example 1.

It can be seen from the results that CO is also discharged under the reaction conditions of this Reference Example 1, and that in a reaction at a temperature as low as 300°C, propane is evolved in a considerable amount. This signifies that those components undesired for human health still remain even in the gas after treatment.

Table 7

| Catalyst | Reaction temperature (°C) | Catalytic reduction ratio of NO into $N_2$ (%) | CO (ppm) | propane (ppm) | $CO_2$ (ppm) |
|---|---|---|---|---|---|
| Example 15 | | | | | |
| H-ZSM-5 and Pt/Al$_2$O$_3$ | 500 | 41 | 0 | 0 | 941 |
| | 400 | 59 | 0 | 0 | 941 |
| | 300 | 48 | 0 | 0 | 945 |
| Reference Example 1 | | | | | |
| H-ZSM-5 | 500 | 38 | 55 | 0 | 937 |
| | 400 | 59 | 143 | 0 | 846 |
| | 300 | 49 | 123 | 102 | 556 |

Example 16

Commercially available FCC alumina powder having a specific surface area of 285 $m^2$/g was used as the reducing catalyst for NOx, and a catalyst comprising an alumina carrier carrying therein 30% of ferric oxide was used as the oxidizing catalyst.

The oxidizing catalyst above was prepared by adding (while stirring) 35 g of commercially available γ-alumina into a solution prepared by dissolving 38 g of ferric nitrate hydrate [Fe(NO$_3$)$_3$ · 9H$_2$O] in 300 ml of distilled water, and then controlling the pH of the solution to a value of 8 by dropwise adding aqueous 14% ammonia thereto to thereby obtain an iron hydroxide precipitate on the alumina. The product obtained by filtering was further washed with water, dried and calcined in air at 500°C for 3 hours to obtain the oxidizing catalyst.

One gram each of the alumina above and the oxidizing catalyst thus prepared were charged together in a normal pressure flow fixed bed type reaction apparatus in the same manner as in Example 15, there was introduced into the apparatus a mixed gas at a flow rate of 60 ml/minute to carry out reaction at 500°C. The gas mixture comprised helium gas carrying therein 1,000 ppm NO, 10% oxygen and propane. The amount of propane was varied as shown in Table 9.

The catalytic reduction ratio of NO was calculated and the product gas was analyzed in the same manner as in Example 15. The results are given in Table 9 as Example 16.

Reference Example 2

The catalytic reduction of NO was carried out in the same manner as in Example 16 except for using 1 g of FCC powder alumina having a specific surface area of 285 $m^2$/g alone, i.e., without using any oxidizing catalyst. The results are given in Table 9 as Reference Example 2.

Table 9

| Catalyst | Propane added (ppm) | Catalytic reduction ratio of NO into $N_2$ (%) | CO (ppm) | propane (ppm) | $CO_2$ (ppm) |
|---|---|---|---|---|---|
| Example 16 | | | | | |
| Alumina powder and Fe-oxide/$Al_2O_3$ | 300 | 36 | 0 | 0 | 992 |
| | 600 | 66 | 0 | 0 | 1886 |
| | 1000 | 90 | 0 | 0 | 3154 |
| | 1300 | 97 | 0 | 0 | 4054 |
| Reference Example 2 | | | | | |
| Alumina powder | 300 | 37 | 87 | 0 | 843 |
| | 600 | 67 | 95 | 0 | 1878 |
| | 1000 | 89 | 176 | 0 | 2857 |
| | 1300 | 95 | 210 | 0 | 2794 |

It can be seen from the Examples, Comparative Examples and Reference Examples above that the process according to the present invention enables the efficient catalytic reduction of NOx into nitrogen even in the presence of excess oxygen, without resulting in a drop in catalyst activity due to the presence of sulfur oxides. Thus, the process according to the present invention is very effective in all the aspects as compared with those of the conventional catalysts.

## Claims

1. A process for removing nitrogen oxides from exhaust gases, which comprises:

    bringing an exhaust gas containing nitrogen oxides into contact with at least one catalyst selected from the group consisting of a proton-type zeolite, a zeolite in alkali metal exchanged form and an acidic alumina in an oxidizing atmosphere containing excess oxygen and in the presence of a hydrocarbon or an oxygen-containing compound, wherein the excess oxygen ratio is from about 20 to about 200 %.

2. The process as claimed in Claim 1, wherein the exhaust gas containing nitrogen oxides is further brought into contact with an oxidizing catalyst.

3. The process as claimed in Claim 1 or in Claim 2, wherein the proton-type zeolites or the alkali metal exchanged form zeolites are pentasil-type zeolites, mordenites, zeolites Y, zeolites X, zeolites L or silicalites.

4. The process as claimed in Claim 1 or in Claim 2, wherein the acidic alumina is obtained by treating a metal oxide with a compound having a sulfate group.

5. The process as claimed in Claim 4, wherein the compound having a sulfate group is sulfuric acid or ammonium sulfate.

6. The process as claimed in Claim 4, wherein the alumina is treated with a compound having a sulfate group by bringing said metal oxide into contact with sulfuric acid having a concentration of from 0.01 to 10 mole/$\ell$, wherein said sulfuric acid is used in an amount by weight of from 5 to 20 times the amount by weight of the metal oxide treated.

7. The process as claimed in Claim 4, wherein the acidic alumina is treated with a compound containing a sulfate group and the acidic metal oxide is calcined in air at a temperature range of from 300 to 800°C.

8. The process as claimed in claim 2, wherein the oxidizing catalyst comprises a porous carrier carrying therein a noble metal, a base metal or a substance having a perovskite crystal structure.

9. The process as claimed in Claim 8, wherein the noble metal is platinum, palladium, rhodium, ruthenium or iridium; the base metal is lanthanum, cerium, copper or iron; and the substance having a perovskite crystal structure is cobalt lanthanum trioxide, iron lanthanum trioxide or cobalt strontium trioxide.

10. The process as claimed in Claim 1 or in Claim 2, wherein the process is conducted in the presence of a hydrocarbon or an oxygen-containing compound at an amount from 20 to 2,000% in excess of the theoretical amount necessary for carrying out the catalytic reduction.

11. The process as claimed in Claim 10, wherein the hydrocarbon is in the form of a gas or a liquid.

12. The process as claimed in Claim 11, wherein the hydrocarbon is in the form of a gas and is methane, ethane, propane, butane, ethylene, propylene or butylene.

13. The process as claimed in Claim 11, wherein the hydrocarbon is in the form of a liquid and is gasoline, kerosene, gas oil or heavy oil.

14. The process as claimed in Claim 10, wherein the oxygen containing compound is an alcohol, an ether, an ester or a ketone.

15. The process as claimed in Claim 1 or in Claim 2, wherein the reaction temperature is in the range of from 200 to 800°C.

16. The process as claimed in Claim 1 or in Claim 2, wherein the exhaust gas is fed to a layer of the catalyst at a space velocity of from 500 to 100,000 $hr^{-1}$.

**Patentansprüche**

1. Verfahren zur Herstellung von Stickoxiden aus Abgasen, umfassend:

   Kontaktieren eines Abgases, das Stickoxide umfaßt, mit zumindest einem Katalysator, ausgewählt aus der Gruppe, bestehend aus einem Zeolithen vom Protonentyp, einem Zeolithen in Alkalimetall ausgetauschter Form und einem sauren Alumina, in einer oxidierenden Atmosphäre, umfassend überschüssigen Sauerstoff, und in der Gegenwart eines Kohlenwasserstoffes oder einer sauerstoffhaltigen Verbindung, worin das Verhältnis des überschüssigen Sauerstoffs etwa 20 bis etwa 200% ist.

2. Verfahren nach Anspruch 1, worin das Abgas, das Stickoxide enthält, weiterhin mit einem oxidierenden Katalysator in Kontakt gebracht wird.

3. Verfahren nach Anspruch 1 oder 2, worin die Zeolithe vom Protonentyp oder die Zolithe in Alkalimetall-ausgetauschter Form Zeolithe vom Pentasiltyp, Mordenite, Zeolithe Y, Zeolithe X, Zeolithe L oder Silicalithe sind.

4. Verfahren nach Anspruch 1 oder 2, worin das saure Alumina durch Behandeln eines Metalloxides mit einer Verbindung mit einer Sulfatgruppe erhalten wird.

5. Verfahren nach Anspruch 4, worin die Verbindung mit einer Sulfatgruppe Schwefelsäure oder Ammoniumsulfat ist.

6. Verfahren nach Anspruch 4, worin das Alumina mit einer Verbindung mit einer Sulfatgruppe behandelt wird, indem das Metalloxid mit Schwefelsäure mit einer Konzentration von 0,01 bis 10 Mol/l in Kontakt gebracht wird, worin die Schwefelsäure in einer Menge, bezogen auf das Gewicht, von der 5 bis 20-fachen Menge, bezogen auf das Gewicht, des behandelten Metalloxides verwendet wird.

7. Verfahren nach Anspruch 4, worin das saure Alumina mit einer Verbindung, umfassend eine Sulfatgrupe, behandelt und das saure Metalloxid an Luft bei einem Temperaturbereich von 300 bis 800°C kalziniert wird.

8. Verfahren nach Anspruch 2, worin der oxidierende Katalysator einen porösen Träger umfaßt, der darin ein Edelmetall, ein Basismetall oder eine Substanz mit einer Perovskit-Kristallstruktur umfaßt.

**9.** Verfahren nach Anspruch 8, worin das Edelmetall Platin, Palladium, Rhodium, Ruthen oder Iridium; das Basismetall Lanthan, Cer, Kupfer oder Eisen; und die Substanz mit einer Perovskit-Kristallstruktur Kobaltlanthantrioxid, Eisenlanthantrioxid oder Kobaltstrontiumtrioxid sind.

**10.** Verfahren nach Anspruch 1 oder 2, worin das Verfahren in der Gegenwart eines Kohlenwasserstoffes oder einer sauerstoffhaltigen Verbindung in einer Menge von 20 bis 2000 % im Überschuß der theoretischen Menge durchgeführt wird, die für die Durchführung der katalytischen Reduktion erforderlich ist.

**11.** Verfahren nach Anspruch 10, worin der Kohlenwassserstoff in der Form eines Gases oder einer Flüssigkeit vorliegt.

**12.** Verfahren nach Anspruch 11, worin der Kohlenwasserstoff in der Form eines Gases vorliegt und Methan, Ethan, Propan, Butan, Ethylen, Propylen oder Butylen ist.

**13.** Verfahren nach Anspruch 11, worin der Kohlenwasserstoff in der Form einer Flüssigkeit vorliegt und Benzin, Kerosin, Gasöl oder schweres Öl ist.

**14.** Verfahren nach Anspruch 10, worin die sauerstoffhaltige Verbindung ein Alkohol, ein Ether, ein Ester oder ein Keton ist.

**15.** Verfahren nach Anspruch 1 oder 2, worin die Reaktionstemperatur im Bereich von 200 bis 800°C liegt.

**16.** Verfahren nach Anspruch 1 oder 2, worin das Abgas zu einer Schicht des Katalysators mit einer Raumgeschwindigkeit von 500 bis 100000 $h^{-1}$ geführt wird.

**Revendications**

**1.** Procédé pour éliminer les oxydes d'azote dans des gaz d'échappement, qui consiste à mettre un gaz d'échappement contenant des oxydes d'azote en contact avec au moins un catalyseur choisi dans le groupe comprenant les zéolites protonées, les zéolites sous forme ayant subi un échange de métal alcalin et les alumines acides, dans une atmosphère oxydante contenant de l'oxygène en excès et en présence d'un hydrocarbure ou d'un composé oxygéné, dans lequel la proportion de l'oxygène en excès est comprise entre environ 20 et environ 200 %.

**2.** Procédé selon la revendication 1, dans lequel les gaz d'échappement contenant des oxydes d'azote sont encore mis en contact avec un catalyseur oxydant.

**3.** Procédé selon la revendication 1 ou 2, dans lequel les zéolites protonées ou les zéolites sous forme ayant subi un échange de métal alcalin sont des zéolites de type pentasil, des mordénites, des zéolites Y, des zéolites X, des zéolites L ou des silicalites.

**4.** Procédé selon la revendication 1 ou 2, dans lequel l'alumine acide est obtenue par traitement d'un oxyde métallique avec un composé ayant un groupe sulfate.

**5.** Procédé selon la revendication 4, dans lequel le composé ayant un groupe sulfate est l'acide sulfurique ou le sulfate d'ammonium.

**6.** Procédé selon la revendication 4, dans lequel l'alumine est traitée avec un composé ayant un groupe sulfate par mise en contact dudit oxyde métallique avec de l'acide sulfurique à une concentration comprise entre 0,01 et 10 mol/l, ledit acide sulfurique étant utilisé en une quantité, en poids, représentant 5 à 20 fois la quantité en poids de l'oxyde métallique traité.

**7.** Procédé selon la revendication 4, dans lequel l'alumine acide est traitée avec un composé contenant un groupe sulfate et l'oxyde métallique acide est calciné dans l'air à une température comprise ente 300 et 800°C.

**8.** Procédé selon la revendication 2, dans lequel le catalyseur oxydant comprend un support poreux supportant un métal noble, un métal de base ou une substance ayant une structure cristalline de perovskite.

**9.** Procédé selon la revendication 8, dans lequel le métal noble est le platine, le palladium, le rhodium, le ruthénium ou l'iridium ; le métal de base est le lanthane, le cérium, le cuivre ou le fer ; et la substance ayant une structure cristalline de perovskite est le trioxyde de cobalt et de lanthane, le trioxyde de fer et de lanthane ou le trioxyde de cobalt et de strontium.

**10.** Procédé selon la revendication 1 ou 2, dans lequel le procédé se déroule en présence d'un hydrocarbure ou d'un composé oxygéné en une quantité comprise entre 20 et 2000 % en excès par rapport à la quantité théorique nécessaire pour réaliser la réduction catalytique.

**11.** Procédé selon la revendication 10, dans lequel l'hydrocarbure est présent sous la forme d'un gaz ou d'un liquide.

**12.** Procédé selon la revendication 11, dans lequel l'hydrocarbure est présent sous la forme d'un gaz et est le méthane, l'éthane, le propane, le butane, l'éthylène, le propylène ou le butylène.

**13.** Procédé selon la revendication 11, dans lequel l'hydrocarbure est présent sous la forme d'un liquide et est l'essence, le kérosène, le gasoil ou l'huile lourde.

**14.** Procédé selon la revendication 10, dans lequel le composé oxygéné est un alcool, un éther, un ester ou une cétone.

**15.** Procédé selon la revendication 1 ou 2, dans lequel la température de réaction est comprise entre 200 et 800°C.

**16.** Procédé selon la revendication 1 ou 2, dans lequel les gaz d'échappement sont envoyés sur une couche du catalyseur à une vitesse spatiale comprise entre 500 et 100 000 $h^{-1}$.